# EUROPEAN PATENT SPECIFICATION

(11) **EP 2 298 080 B1**
(45) Date of publication and mention of the grant of the patent: **26.03.2014**
(21) Application number: 09168923.2
(22) Date of filing: 28.08.2009
(51) Int. Cl.: A23G 3/52, A23G 1/52, A23C 19/076, A23G 1/10, A23G 3/02, B01F 5/04, A23L 1/38, A23F 5/24, A23P 1/16, A21D 8/02, A23L 1/24

(54) **Method and apparatus for making aerated food product**
Verfahren und Vorrichtung zur Herstellung belüfteter Lebensmittelprodukte
Procédé et appareil pour la fabrication d'un produit alimentaire aéré

(43) Date of publication of application: 23.03.2011
(73) Proprietor: Kraft Foods R & D, Inc., Northfield, IL 60093-2753 (US)
(72) Inventor: Abylov, Melis, 80797 München (DE); Macura, Szymon Piotr, 43400 Cieszyn (PL); Klaus, Tadeusz, 43400 Cieszyn (PL); Simonson, Julie Ann, NJ 08088 Tabernacle (US); Pearson, Stephen Malcom, 85662 Hohenbrunn (DE)
(74) Representative: HOFFMANN EITLE

(56) References cited:
- WO-A1-02/37977
- WO-A1-2009/110794
- WO-A2-02/13618
- DE-C1- 3 314 551
- GB-A- 2 141 917
- US-A- 4 674 888
- US-A- 5 202 147
- US-A1- 2006 147 584
- DATABASE FSTA [Online] INTERNATIONAL FOOD INFORMATION SERVICE (IFIS), FRANkFURT-MAIN, DE; 2002, CHANG Y ET AL: "Measurement of air cell distributions in dairy foams." XP002565203 Database accession no. 2002-00-p1440
- J. HAEDELT ET AL: 'Bubble-Included Chocolate: Relating Structure with Sensory Response' JOURNAL OF FOOD SCIENCE vol. 72, no. 3, 01 April 2007, pages E138 - E142, XP055015547 DOI: 10.1111/j.1750-3841.2007.00313.x ISSN: 0022-1147

## Description

Incorporation of gas cells, also known as aeration, impacts textural properties of food products. Generally, their texture is lighter than the texture of non-aerated products and often times, the aerated products also exhibit a more pleasant and a lighter taste. Because of the incorporated gas cells, aerated products also have lower calorific value per volume than non-aerated products. This is an important property, especially for products with high calorific values such as chocolate and fat-containing foods. While a number of aerated products is known, generally speaking they are not satisfactory, especially in view of their texture.

For instance, aerated chocolate has been sold in the market place for a long time. However, the aerated chocolate has a rather unique structure with gas bubbles in the order of a few millimetres. Because of this, aerated chocolate represents an alternative to conventional non-aerated chocolate rather than a lighter version thereof.

While such aerated products may have some market potential, they are not desirable in general. On the contrary, rather than displaying large cells, it would be much more desirable to provide aerated products with gas cells virtually undetectable to the human eye. Such products will be referred to as microcellular in the following and are highly desirable as their texture is very close to that of non-aerated products. However, per unit volume, they contain less calories.

Providing food products such as chocolate with small microscopic and uniform cells is difficult to achieve. Prior art methods aiming at small uniform cells have only partially succeeded, both in terms of the required effort and the results.

US 5,238,698 discloses a method of making aerated sucrose-free chocolate. In this process, the chocolate composition is continuously fed into a hopper under pressure and at temperatures in the range of from about 30° to 45°C. The chocolate composition is maintained under pressure and pumped through a series of static mixer elements after being injected with an inert gas. Following repeated gas injection and further mixer elements, the gas-containing chocolate composition is then pumped into a depositor which is also maintained under pressure in the order of 3 to 5 bars. Still under pressure, the chocolate mass is then put into molds, and pressure is released so as to develop a cellular structure.

This process is disadvantageous as it produces rather large cells and generally speaking, the density reduction is limited. There is, of course, a link between the size of the cells and the achievable density reduction. Materials with large cells tend to suffer from cell collapse to a greater extent than materials with small cells. Accordingly, if the number of large cells is increased, the likeliness of a loss of the cellular structure is also increased.

A further approach to aerated foods is disclosed in WO 02/013618. The process according to this document is also based on a combination of gas injection and static mixers. The result is again large cells of an average size of 0.7 mm in chocolate. Smaller cells of a size of 0.2 mm are only obtained in small pieces.

This goes to show that producing aerated foods with a microcellular structure is difficult. This is in part also due to the fact that in order to produce very small cells, prior art methods propose more intensive mixing procedures. This, however, also means that a higher amount of energy is introduced which, in turn, can cause changes in the product structure which can be due to the generated heat and/or high shear (WO 2002/013618).

EP 0 730 826 discloses a method for the production of a mixture of solid particles dispersed in a continuous lipid phase. This process comprises a mixing step in which the solid particles in lipids are mixed to form a mixture which is then subjected to a refining step in which the solid particles are ground. Before the grounding step, micronized bubbles are incorporated by way of a microporous diffuser. In the case of EP 0 730 826, however, the micronized bubbles do not remain in the product. They only serve to remove unwanted volatiles in the subsequent milling step.

In view of this prior art, the present invention sets out to provide a method for making an aerated food product. The present invention thereby does not aim at the manufacture of an aerated product in general but primarily at a microcellular food product, wherein the gas cells or bubbles are small and evenly distributed without impairing the product properties. Accordingly, the present invention aims at providing a method where a microcellular structure can be obtained with little mechanical action and thermal stress imposed on the product. The present invention is also directed to an apparatus for manufacturing the microcellular food product.

The above objects are achieved by the process according to the present invention. According to the process of the present invention, gas cells are incorporated into food process medium as defined in claim 1 by introducing an edible or inert gas through at least one microporous diffuser into the process stream. The thus obtained gas/food mixture is then blended by a static mixer.

With this process, the present invention allows to produce aerated food materials, in particular microcellular food products which demonstrate a substantial density reduction versus non-aerated food products with little change in texture or taste. Moreover, the method according to the present invention is suited for industrial scale production. The present invention thus provides for a highly beneficial process.

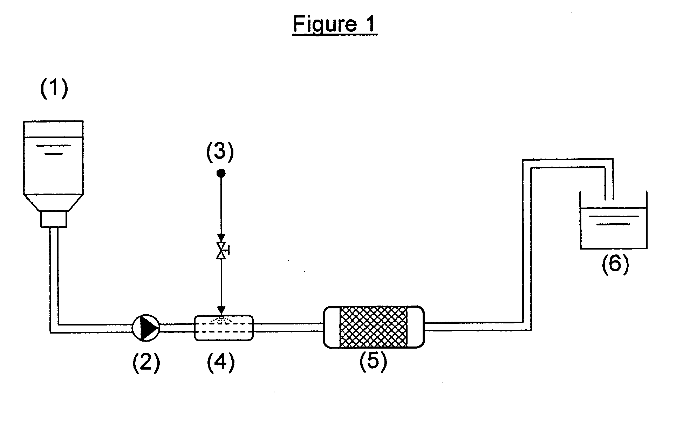

The process according to the present invention is illustrated in Figure 1. For the sake of clarity, the proportions of the equipment elements are not respected in this figure.

Figure 1 shows the process according to the present invention when used for making aerated chocolate. In the tempering machine (1), the chocolate is tempered and then forwarded by virtue of the pump (2) towards the static mixer (5). Before the static mixer, an inert gas such as nitrogen, is introduced from an inert gas supply (3) into the chocolate flow by way of a microporous diffuser (4). Downstream from the static mixer, the chocolate can be delivered to a depositing head or manifold (6) for filling into molds, containers, or the like. The position of the pump, or pumps if there are more than one, in the process is not strictly limited so long as it is capable of pumping the food medium through the process.

The type of food that can be aerated according to the disclosed process is not particularly limited.

Typically the food is a food that can be conveyed inside a pipeline. Various foods such as chocolate, coffee extract, cream cheese, process cheese, other dairy products, ketchup, peanut butter as well as bakery products represent application examples for this invention.

The viscosity of the process medium before adding the gas through the microporous diffuser is in the range of 1 to 200 Pa·s, and preferably within the range of 1 to 60 Pa·s.

Preferred products are chocolate and cream cheese.

Chocolate formulas are of the type well known in the art and within the official Standards of Identity for chocolate and chocolate products.

Here below is the generic formula for milk chocolate as used during test runs.

| Ingredient | Percentage by weight |
|---|---|
| Sugar | 35.0 - 40.0 |
| Cocoa butter | 15.0 - 20.0 |
| Cocoa liquor | 12.0 - 17.0 |
| Skimmed milk powder | 6.5 - 11.5 |
| Sweet whey powder | 5.0 - 10.0 |
| Milk fat | 0.0 - 5.0 |
| Hazelnut paste | 0.0 - 1.0 |
| Lecithin | 0.0 - 0.5 |

The food may comprise solid particles such as nuts, vegetables or the like to blend with the product. Typically nuts, raisins and corn flakes are suitable for use in chocolate and vegetables such as bell peppers or chives are suitable in the case of cream cheese. There is no general limitation in this regard as long as the particulate materials have a size and shape so that they can pass the static mixer without being deteriorated or obstructing the mixer.

The gas according to the present invention is an inert gas acceptable for use in food products. In particular, the present invention may use air, nitrogen, carbon dioxide as well as inert gases such as argon. Preferred gases are nitrogen and carbon dioxide. When choosing the gas, it should be born in mind that products with a high water activity may have a tendency to dissolve carbon dioxide more readily than nitrogen. The dissolved carbon dioxide may acidify the product. Furthermore, fluid food additives or components such as flavors, etc. may be introduced into a food medium in the form of microscopic droplets through the microporous diffuser for accelerated uniform distribution of flavor.

The gas is introduced by way of a microporous diffuser. Such diffusers are known in the art, e.g. from EP 0 730 826, EP 1 932 649, WO 06021375, US 6 593 384, etc. Such diffusers are almost exclusively used in the manufacture of micro porous polymers.

The most conventional shape for the microporous gas diffuser is a relatively thin, long, hollow cylinder. This type of diffuser shape facilitates simplified incorporation of the diffuser inside the product pipeline and does not hinder the product flow. However, any other shape that accommodates for uniform distribution of gas cells within product is adequate for the diffuser.

For the use according to the present invention, these diffusers do not need specific adaptation. Generally, any diffuser is suitable as long as it is permeable to gas to an extent that allows enough gas to be introduced into the food stream so as to allow for the desired density reduction. Microporous diffusers with pore size in the range 0.1 to 20 µm, preferably 0.2 to 10 µm and most preferably 0.3 to 5 µm are generally preferred. The diffusers may be made from sintered metals and may be coated with a protective finish. However, other sintered and/or porous materials allowed for the use in food industry can also be utilized.

The pressure required for introducing the gas into the food stream depends on the type of gas, the type of product, as well as the diffuser porosity and pore size distribution. It is also impacted by the desired cell size and gas volume fraction in the final product. For most of the applications within the food industry, the pressure ranges from 0.5 to 20 bar before the microporous diffuser, and preferably from 6 to 10 bar. However, for specific applications, e.g. gas injection into a coffee extract, the required pressure may range from 50 to 300 bar, preferably 80 to 120 bar.

The gas volume fraction incorporated into the food product depends on the specific application and is in the range of 10 to 30% vol.

Line pressure downstream from the diffuser is adjustable by means known in the industry such as a mechanical valve, pneumatic pinch valve, etc. in order to avoid rapid pressure drops from the diffuser to the point of discharge.

The gas/food mixture is then subjected to blending in a static mixer. Mixers of this kind are known in the art and commercially available. The specific mixer type depends on viscosity and mixing ratio, for most of the applications within food industry the static mixer with intersecting blades represents the preferred option.

The static mixer serves to blend the gas/food mixture and to reduce the overall cell size. The number of mixing elements is in the inverse proportion to the ratio "additive to mainstream medium", i.e. the smaller the ratio, the higher number of mixing elements is required. The correlation between the number of mixing elements and the mixing ratio is well known to those skilled in the art.

The temperature of the food stream when adding the gas and subjecting it to the static mixer needs not be the same. However, conveniently, both steps are effected at the same temperature. Typically, the temperature is chosen such that a sufficient amount of gas can be absorbed without negatively influencing the product. Thus, for chocolate for instance, it is important to keep the temperature between 27°C and 34°C so as to maintain the chocolate in a tempered state and avoid later blooming. Products with high protein content will rarely be subjected to temperatures above 40°C. In general, the temperature range is 15°C to 60°C for both the gas addition and the static mixing.

The temperature of the product may be adjusted downstream of the static mixer so as to achieve the desired product properties upon deposition, e.g. product viscosity will be largely affected by the deposition temperature.

Product deposition at low temperatures is generally preferred, as typically low temperatures such as temperatures of 30°C or less, e.g., 25°C or less even 15°C or less lead to a higher product viscosity, which improves gas cell retention. Various depositors well known in the art can be utilized to facilitate depositing at lower temperatures. In any event, the deposition temperature can be optimized by the skilled person depending on the product and its desired properties.

As mentioned before, the manufacturing process according to the present invention provides products with a microcellular structure.

Microcellular generally implies gas cells, wherein the everage cell size falls within the range of 5 to 30 µm.

The gas cell size can be established with known techniques, e.g. by x-ray micro-tomography.

X-Ray micro-tomography provides unique opportunities to visualize and measure the microstructure of food materials in two and even three dimensions. It allows non-destructive measurements without a time consuming preparation method.

A micro-focus x-ray force illuminates the object and a planar x-ray detector collects magnified projection images. Based on hundreds of angular views acquired while the object rotates, a radiographic image is generated. The reconstruction takes place using a Feldkamp algorithm. A 3D-object is obtained by addition of sequently reconstructed slices.

### Specifications of instrument:

| | |
|---|---|
| Name: | SkyScan 1172 |
| X-Ray source: | 20 - 100 kV |
| X-Ray detector: | camera with 10 Megapixel |
| Detail detectability: | till 1 *µ*m depending on the distance between sample holder and camera |
| Maximal object size: | 68 mm in diameter |

### Measurement:

### Sample preparation:

No preparation is required. Exceptionally, in order to achieve high resolutions, it may be necessary to reduce the original sample size. Each sample is measured in triplicate.

### Analysis of samples (software CTan 1.8 was used)

Different steps for analysis:
- Reload data set of the reconstructed raw image into the memory of analysis software.
- Determination of a region of interest (ROI) or a volume of region (VOI) for evaluation (ROI or VOI should be equal for the whole sample set)
- Generation of a binary image: Reconstructed image is converted into a gray scale image on the basis of density differences; Based on the choice of grey scale, different structures in the image can be determined.
- Custom processing: The program identifies all objects in the VOI (i.e. air bubbles) and calculates the volume of each object. The analysis of the air bubbles takes place under the assumption that all particles are spherical. On the basis of the volume value for each air bubble, the pore size radius is calculated. For the number distribution the air bubbles are classified in different pore radius groups, in which the number of pores are summarised. The volume distribution shows the proportional share of the total volume which is taking by different size classes.

*Approximation:* Result represents the mean average value of three analysis results of three different sample scans.

This is a standard procedure that is independent from the x-ray machine and the software. Of course, the skilled person will understand that the sample size and the number of bubbles must be chosen such that they fairly represent the material.

The product of the process according to the present invention typically contains 30% or less by volume of gas. Preferably, the gas volume fraction is less than 25% and most preferable it is in the range of 10 to 25%. The best results are obtained when the aforementioned preferred gas volumes and preferred cell sizes are realised in combination.

In the preferred embodiment, further downstream of the process up until the depositor discharge point, the process parameters need to be maintained so as to avoid rapid pressure drops and large temperature changes. Any of these will lead to thermodynamic instabilities within the system, and result in cell sizes deviating from standard.

Further process and formula modifications can be utilized together with this method for adjustment of final results, e.g. employment of pipes with different cross sectional area downstream the apparatus, usage of Venturi tubes, positioning of porous diffuser further upstream, use of emulsifiers and/or ingredients for viscosity alteration, etc.

The present invention provides beneficial food products which can be used as such. The products according to the present invention can also be used as part of composite food products, e.g. as a filling, as layers or coatings. It is, of course, also possible to combine one or more products obtainable according to the method of the present invention.

### Examples

### Example 1

The apparatus comprising a microporous diffuser with pore size 1-5 µm and a static mixer with intersecting blades inside a DN25 pipeline was utilized for producing a microcellular wafer filling with nitrogen and carbon dioxide. For both gases, the specific weight of the wafer filling was reduced by 25% with gas cells non-detectable by the unaided human eye. Gas cell size distribution analysis demonstrated that the cell size ranged from 20 µm to 400 µm.

The ingredient composition of the wafer filling is summarized in the table below.

| Ingredient | Percentage by weight |
|---|---|
| Sugar | 38.0 |
| Specialty fat | 36.0 |
| Sweet whey powder | 15.0 |
| Ground wafer sheet | 8.0 |
| Cocoa powder | 2.94 |
| Cocoa flavour | 0.05 |
| Soy lecithin | 0.01 |

### Comparative Example

An installation comprising only a static mixer with intersecting blades was utilized for aeration of the same formula wafer filling with nitrogen and carbon dioxide. The static mixer was inserted into a product pipe with a corresponding cross-section and a gas injection port with a check valve was situated upstream the static mixer. For both gases, the process settings for specific weight reduction higher than 5% resulted in a jolting and inconsistent rate of product discharge that indicated ineffective gas diffusion in the process medium, i.e. presence of large pockets of gas within the wafer filling.

## Claims

1. Method of producing aerated food products selected from chocolate, cream cheese, and process cheese, comprising the steps of
I. introducing gas through at least one microporous diffuser into a stream of food process medium so as to obtain a gas/food mixture and
II. subjecting said gas/food process medium mixture to a blending operation in a static mixer,
wherein the aerated food products have an average gas cell size falling within the range of 5 to 30 µm, and
wherein the viscosity of said food process medium before adding the gas through the microporous diffuser is in the range of 1 to 200 Pa·s.

2. Method according to claim 1, wherein the gas is an edible gas, an inert gas, an edible or inert gas or mixtures thereof.

3. Method according to claim 1 or claim 2, wherein the gas is a fluid food ingredient such as a flavour, additive, etc.

4. Method according to any one of the preceding claims, wherein gas is added so that the aerated food product contains 10 to 30 vol.-% gas.

5. Apparatus for producing aerated food products selected from chocolate, cream cheese, and process cheese, comprising a microporous diffuser and a static mixer, wherein the microporous diffuser is situated upstream of the static mixer such that a gas can be added to a food medium through the microporous diffuser prior to the food medium passing through the static mixer.

## Patentansprüche

1. Verfahren zur Herstellung von mit Luft durchsetzten Nahrungsmitteln, ausgewählt aus Schokolade, Frischkäse und Schmelzkäse, das die folgenden Schritte umfasst:
I. Einleitung von Gas in einen Strom eines Nahrungsmittelprozessmediums über mindestens einen mikroporösen Diffusor, so dass eine Mischung aus Gas/Nahrungsmittel erhalten wird, und
II. Mischen dieser Mischung aus Gas/Nahrungsmittelprozessmedium in einem statischen Mischer,
wobei die mit Luft durchsetzten Nahrungsmittel eine durchschnittliche Gaszellengröße aufweisen, die im Bereich von 5 bis 30 µm liegt, und
wobei die Viskosität des genannten Nahrungsmittelprozessmediums vor der Zufuhr des Gases über den mikroporösen Diffusor im Bereich von 1 bis 200 Pa·s liegt.

2. Verfahren gemäß Anspruch 1, wobei das Gas ein genusstaugliches Gas, ein inertes Gas, ein genusstaugliches Gas oder inertes Gas oder Mischungen hiervon darstellt.

3. Verfahren gemäß Anspruch 1 oder Anspruch 2, wobei das Gas ein fluider Nahrungsmittelbestandteil ist, wie z.B. ein Aroma, Additiv, etc.

4. Verfahren gemäß einem der vorhergehenden Ansprüche, wobei das Gas so zugeführt wird, dass das mit Luft durchsetzte Nahrungsmittel 10 bis 30 Vol.% Gas enthält.

5. Vorrichtung zur Herstellung von mit Luft durchsetzten Nahrungsmitteln, ausgewählt aus Schokolade, Frischkäse und Schmelzkäse, das einen mikroporösen Diffusor und einen statischen Mischer umfasst, wobei sich der mikroporöse Diffusor stromaufwärts des statischen Mischers befindet, so dass ein Gas über den mikroporösen Diffusor zu einem Nahrungsmittelmedium zugeführt werden kann, bevor das Nahrungsmittelmedium den statischen Mischer durchläuft.

## Revendications

1. Procédé de production de produits alimentaires aérés choisis parmi le chocolat, le fromage à la crème, et le fromage fondu, comprenant les étapes qui consistent
I. à introduire un gaz à travers au moins un diffuseur microporeux dans un flux de milieu de transformation alimentaire de façon à obtenir un mélange de gaz/aliment et
II. à soumettre ledit mélange de gaz/milieu de transformation alimentaire à une opération de mélange dans un mélangeur statique,
dans lequel les produits alimentaires aérés ont une taille moyenne de cellules de gaz se trouvant dans la plage allant de 5 à 30 µm, et
dans lequel la viscosité dudit milieu de transformation alimentaire avant d'ajouter le gaz à travers le diffuseur microporeux se situe dans la plage allant de 1 à 200 Pa.s.

2. Procédé selon la revendication 1, dans lequel le gaz est un gaz comestible, un gaz inerte, un gaz comestible ou inerte ou des mélanges de ceux-ci.

3. Procédé selon la revendication 1 ou la revendication 2, dans lequel le gaz est un ingrédient alimentaire fluide tel qu'un arôme, un additif, etc.

4. Procédé selon l'une quelconque des revendications précédentes, dans lequel le gaz est ajouté de manière à ce que le produit alimentaire aéré contienne de 10 à 30% en volume de gaz.

5. Appareil de production de produits alimentaires aérés choisis parmi le chocolat, le fromage à la crème, et le fromage fondu, comprenant un diffuseur microporeux et un mélangeur statique, dans lequel le diffuseur microporeux est situé en amont du mélangeur statique de sorte qu'un gaz puisse être ajouté à un milieu alimentaire à travers le diffuseur microporeux avant le passage du milieu alimentaire à travers le mélangeur statique.
